## Europäisches Patentamt

**European Patent Office**

**Office européen des brevets**

(19)

(11) Numéro de publication: **0 157 993**

**B1**

(12) **FASCICULE DE BREVET EUROPÉEN**

(45) Date de publication du fascicule du brevet:
**06.04.88**

(51) Int. Cl.⁴: **E 04 B 1/19**

(21) Numéro de dépôt: **84830112.3**

(22) Date de dépôt: **12.04.84**

(54) Structure réticulaire, tridimensionnelle, à montants par éléments.

(43) Date de publication de la demande:
**16.10.85 Bulletin 85/42**

(45) Mention de la délivrance du brevet:
**06.04.88 Bulletin 88/14**

(84) Etats contractants désignés:
**AT BE CH DE FR GB IT LI LU NL SE**

(56) Documents cité:
**FR-A-1 370 494**
**FR-A-1 418 868**
**FR-A-1 489 687**
**FR-A-1 554 634**
**FR-A-2 171 620**
**FR-A-2 273 129**
**US-A-2 868 568**

(73) Titulaire: **C.P.M. Costruzioni Progettazione Meccanica S.d.f. tra PAPARO Elio & BILIOTTI Leonardo, Via Pisana 182 R., I-50143 Firenze (IT)**

(72) Inventeur: **Paparo, Elio, Via Pisana 182 R., I-50143 - Firenze (IT)**

(74) Mandataire: **Martini, Lazzaro, Ufficio Brevetti Ing. Lazzaro Martini Via Brunelleschi, 1, I-50123 Firenze (IT)**

LIBER, STOCKHOLM 1988

EP 0 157 993 B1

## Description

L'invention concerne une structure réticulaire, tridimensionnelle, à montants par éléments.

On connaît des structures, étagères par éléments avec montants et/ou rayons, fixés entre eux au moyen de joints à plusieurs voies orthogonales, passants ou non, et pourvus d'une ou de plusieurs vis de blocage.

D'autre part, lesdites étagères par éléments connues permettent la disposition des montants d'un même joint et des rayons seulement selon trois directions orthogonales, de sorte que chaque joint ne peut relier plus de six montants et en outre, le blocage des montants est possible seulement avec le blocage des joints et une fois que l'étagère est composée, elle ne peut être modifiée si ce n'est em ouvrant et en refermant au moins un de ses joints après avoir ajouté ou enlevé au moins un des montants.

On connaît également, d'après le brevet FR-A-1 554 634, un dispositif de montage multidirectionnel pour structures réticulaires constitué d'une plaque de base polygonale ou ciculaire pourvue d'échancrures dans lesquelles sont encastrées plusieurs plaques polygonales ou semicirculaires, disposées verticalement et en éventail autour d'un axe central, de façon à former des secteurs réguliers, des volumes métalliques vides et ouverts formant chappe de forme correspondant auxdits secteurs et pourvus sur les deux parois verticales d'une fente curviligne, et de montants longilignes dont les extrémités plates sont destinées à être insérées entre une des plaques verticales et la paroi verticale du volume métallique correspondant et pourvues d'une excroissance curviligne coulissant dans ladite fente correspondante, et un ensemble de vis de fixation des plaques et des volumes métalliques et de liaison unidirectionnelle des montants au dispositif. Un tel dispositif présente l'incovénient d'un montage long et compliqué en raison des multiples fixations, plaques, volumes et montants, et de plus l'ajout ou la suppression d'un montant nécéssite le démontage du volume métallique correspondant et de l'éventuel montant déjà en place.

L'objectif principal de l'invention est de proposer une structure réticulaire, tridimensionnelle par éléments de plus de six montants reliés à un même noeud et avec les montants pouvant être reliés de manière autonome aux noeuds et de toute façon orientés deux à deux entre eux et partant non plus de manière orthogonale.

On est parvenu à ces résultats en conformité avec l'invention en réalisant une structure réticulaire du type précité, tridimensionelle, par éléments, comprenant des noeuds destinés chacun à la fixation d'un ensemble de montants diversement inclinés, chaque noeud étant défini par huit secteurs égaux, à profil semicirculaire, disposés verticalement en évantail autour d'un axe central, et definis en outre par huit autres secteurs égaux, horizontaux, à profil triangulaire, situés dans un même plan, et avec leurs sommets au centre dudit noeud, caractérisé par le fait que chaque montant est pourvu à ses extrémités d'un étau à croisillon comprenant deux pointes parallèles à profil tronconique, pourvues d'une gorge d'assemblage rotatif sur la tête dentée annulaire, d'une douille fixée à l'extrémité du corps dudit montant, de mors plats et de profilés en croix, et une vis de blocage des pointes sur ladite tête dentée de la douille et sur une intersection ou portion de secterus d'un noeud, et par le fait que l'axe central des noeuds est creux et au moins partiellement taraudé à ses deux extrémités pour permettre l'insertion par vissage de deux étriers munis de quatre ailerons disposés en croix et correspondant auxdits profilés.

Les avantages obtenus grâce à l'invention consistent essentiellement en ce qu'il est possible, avec un même noeud, de relier un grand nombre de montants; que un tel nombre augmente progressivement avec l'accroissement du diamètre du noeud; qu'il est possible d'assembler les moritants sur un même noeud avec une distance angulaire amplement variable pour chaque couple de montants (de plus à moins 90°); qu'il est possible de composer des structures avec les montants disposés suivant les arêtes et les diagonales de figures solides régulières et également de composer des structures en forme de figures géométriques tridimensionnelles irrégulières très légères, mais de grande rigidité et robustesse; qu' il est possible de modifier, c'est-à-dire de réduire ou d'agrandir, une structure préexistante, en enlevant ou en ajoutant un ou plusieurs montants à un même noeud sans toucher tous les autres montants.

L'invention sera décrite ci-dessous plus en détail à l'aide de dessins montrant seulement une forme possible d'exécution.

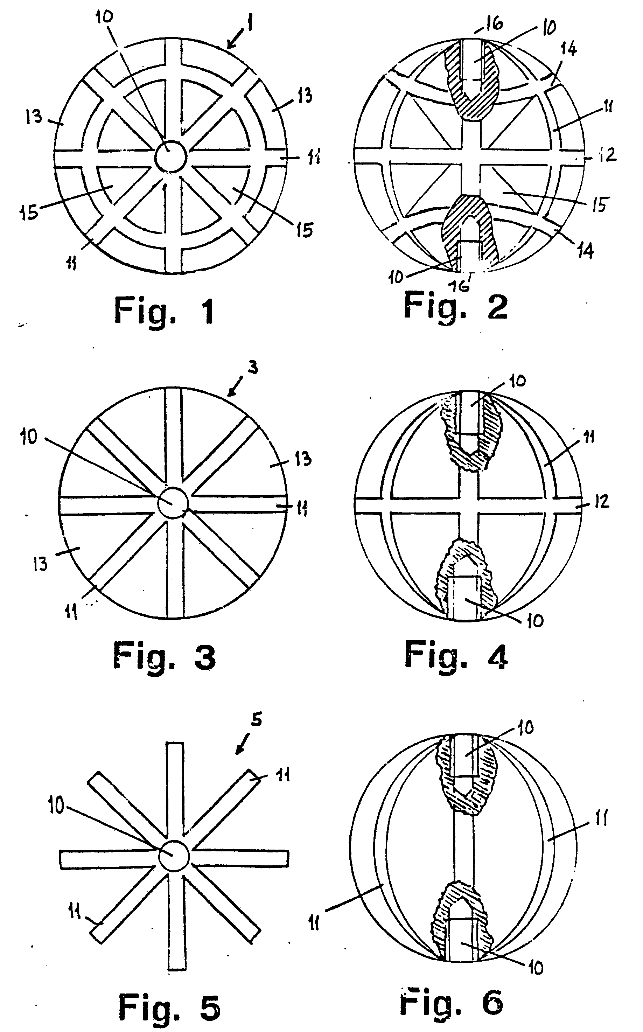

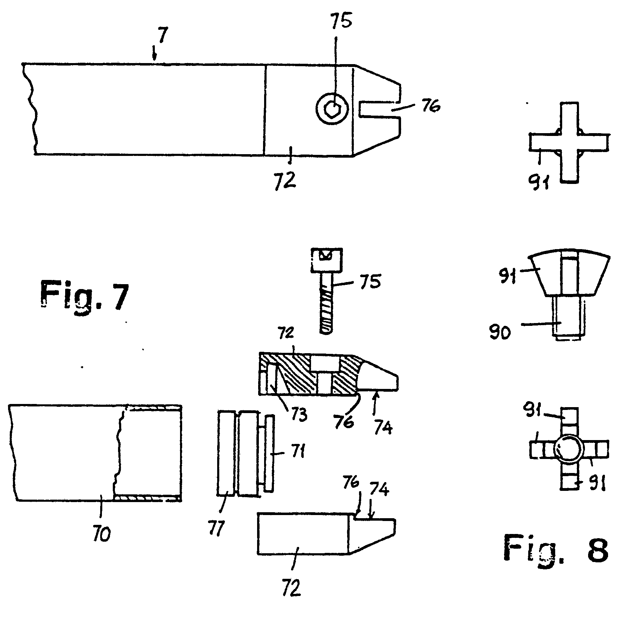

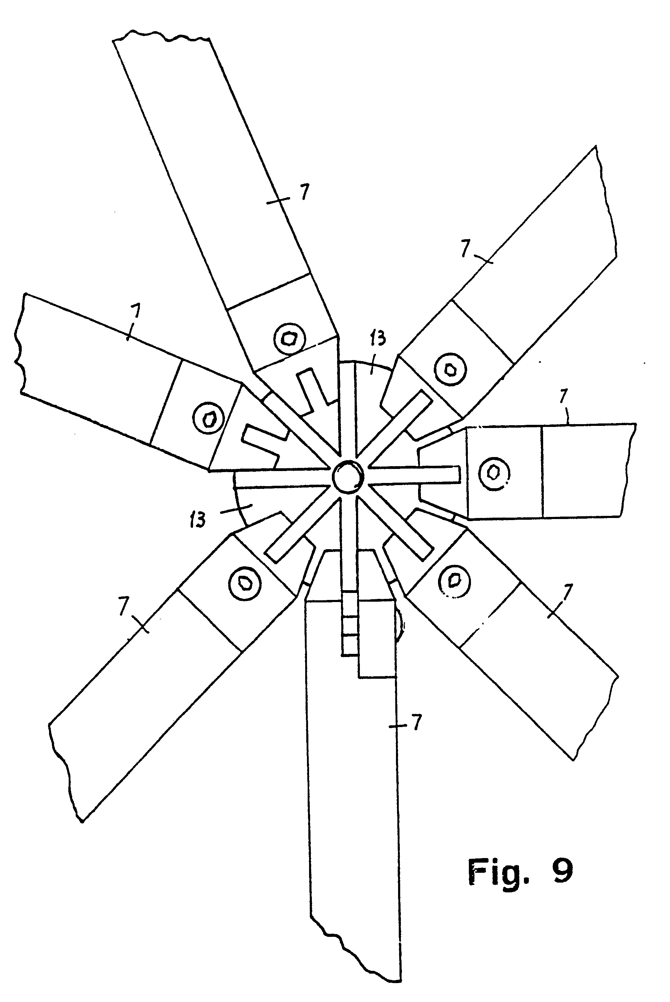

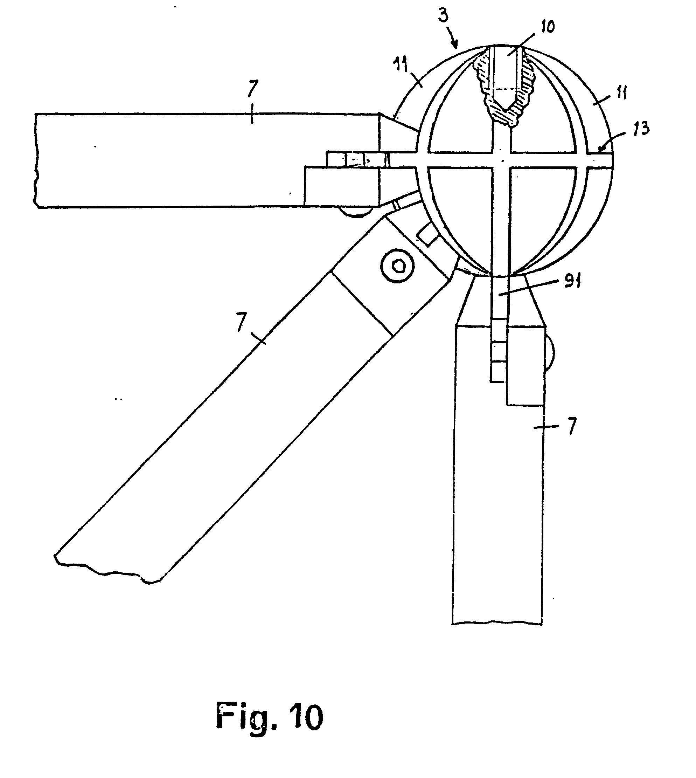

La FIG. 1 représente la vue en plan d'un noeud pour une structure réticulaire par éléments selon l'invention; la FIG. 2 représente la vue de face, en section, du noeud de la FIG. 1; la FIG. 3 répréserte la vue en plan du noeud de la FIG. 1 simplifié; la FIG. 4 représente la vue de face, en section du noeud de la FIG. 3 ; la FIG. 5 représente la vue en plan du noeud de la FIG. 3 ultérieurement simplifié; la FIG. 6 représente la vue de face du noeud de la FIG. 5; la FIG. 7 représente la vue et la section longitudinale, d'un étau appliqué à un montant pour une structure conforme à l'invention; la FIG. 8 représente, vu d'en haut, latéralement et d'en bas, le détail d'un étrier pour relier un montant dans le prolongement de l'axe du noeud des FIG. 1 - 3 - 5; la FIG. 9 représente, vu d'en haut, le noeud de la FIG. 1 auquel sont appliqués sept montants horizontaux la FIG. 10 représente, vu de face, le noeud de la FIG. 3 avec trois montants se trouvant dans un même plan vertical et formant, deux à deux, des angles de 45°.

En se référant aux dessins ci-joints, une structure réticulaire, tridimensionnalle, à montants par éléments suivant l'invention comprend un nombre quelconque de montants 7 égaux ou non, reliés entre eux au moyen d'un nombre adéquat de noeuds 1 - 3 - 5: les noeuds sont de type complet 1 et de type simplifié 3 - 5.

Un noeud 1 complet, tel qu'il est représenté dans les FIG. 1 - 2 des dessins ci-joints, est composé de huit secteurs 11 à profil semicirculaire, disposés verticalement en éventail autour d'un axe central 10, creux et avec les couples de secteurs diamétralement opposés formant quatre cercles méridiens correspondants. Lesdits secteurs 11 sont entrecoupés par huit secteurs égaux correspondants 13 à profil triangulaire, situés dans le même plan, avec le sommet au centre du noeud et formant un cercle 12 équatorial et par seize autres secteurs égaux correspondants 15 à profil triangulaire avec leur sommet au centre du noeud 1 et leurs bases formant deux cercles correspondants plus petits 14 équidistants des pôles 16 et du cercle équatorial 12 du noeud 1.

Le trou de l'axe 10 est avantageusement taraudé, au moins en correspondance avec ses deux extrémités, pour permettre l'insertion à vis d'un étrier du type illustré dans la FIG. 8 des dessins ci-joints et constitué d'une tige 90 filetée, dont d'une extrémité se détachent quatre ailerons 91 égaux disposés en croix et destinés à retenir l'étau en croisillon d'un montant vertical correspondant de la structure ou alors de permettre de fixer le noeud à une parois verticale ou à un plafond.

Un noeud 3 simplifié, tel qu'il est représenté dans les FIG. 3 et 4 des dessins ci-joints, est semblable au noeud 1 duquel il diffère par l'absence des secteurs 15.

Un noeud 5 encore simplifié, tel qu'il est représenté dans les FIG. 5 et 6 des dessins ci-joints, est semblable au noeud 1 duquel il diffère par l'absence des secteurs 15 et 13.

Chacun des noeuds 1 - 3 - 5 est avantageusement réalisé en un ou plusieurs éléments, de métal ou matériel plastique rigide.

Les montants 7 sont constitués par un corps 70 de longueur variable, de préférence tubulaire, à section carrée ou circulaire et dont les extrémités sont pourvues d'une douille 77, fixée au corps 70 par soudure ou au moyen d'une vis tamponnée, et dont la tête dentée 71 annulaire permet l'insertion, tournante, de deux pointes 72 parallèles, à profil en tronc cônique, qui forment l'étau, ces pointes étant pourvues d'une gorge correspondate 73, d'un mors 74 plat et de profilés 76 en croix et tenues ensemble par une vis 75 laquelle sert en outre pour bloquer l'étau à un noeud et au montant, tandis que lesdits profilés 76 permettent d'insérer les pointes 72 sur une intersection d'un noeud 1 - 3 ou sur une portion correspondante des secteurs 11 - 13 - 15 des noeuds 1 - 3 - 5.

## Revendications

1. Structure réticulaire, tridimensionelle, par éléments, comprenant des noeuds (1 - 3 - 5) destinés chacun à la fixation d'un ensemble de montants (7) diversements inclinés, chaque noeud (1 - 3 - 5) étant défini par huit secteurs (11) égaux, à profil semicirculaire, disposés verticalement en éventail autour d'un axe central (10) et définis en outre par huit autres secteurs (13) égaux, horizontaux, à profil triangulaire, situés dans un même plan, et avec leurs sommets au centre dudit noeud (1 - 3), caractérisé par le fait que chaque montant (7) est pourvu à ses extrémités d'un étau à croissillon comprenant deux pointes (72) parallèles à profil tronconique, pouvues d'une gorge (73) d'assemblage rotatif sur la tête dentée annulaire (71) d'une douille (77) fixée à l'extrémité du corps (70) dudit montant (7), de mors plats (74) et de profilés en croix (76), et une vis (75) de blocage des pointes (72) sur ladite tête dentée (71) de la douille et sur une intersection ou portion de secteurs d'un noeud (1 - 3 - 5), et par le fait que l'axe central (10) dudit noeud (1 - 3 - 5) est creux et au moins partiellement taraudé à ses deux extrémités pour permettre l'insertion par vissage de deux étriers (9) munis de quatre ailerons (91) disposés en croix et correspondant auxdits profilés (76).

2. Structure réticulaire selon la revendication 1 caractérisée par le fait que lesdits noeuds (1) sont définis par seize secteurs supplémentaires (15) égaux, à profil triangulaire avec leur sommet au centre du noeud (1) et disposés sur des plans radiaux correspondants, en couples symétriques par rapport à chacun desdits autres secteurs à profil triangulaire (13).

## Patentansprüche

1. Netzförmige und dreidimensionale aus Elemente bestehende Struktur, die Knoten (1 - 3 - 5) enthält, deren jeder zur Festlegung einer Menge von Stütze (7) mit vershiedenen Schrägstellungen bestimmt ist, wobei jeder Knoten durch acht gleichförmige Sektoren (11) bestimmt ist, die ein Halbkreisprofil haben, um einer zentrischen Achse (10) fächerweise und verikalweise angeordnet sind und ausserdem durch acht andere gleichförmige horizontale Sektoren (13) bestimmt sind, die ein dreieckiges Profil haben, in einer selben Ebene und mit ihren Spitze in der Mitte des genannten Knoten (1 - 3) angeordnet sind, dadurch gezeichnet dass jede Strütze (7) an ihren Enden mit einem kreuzförmigen Schraubstock versehen ist, der zwei parallele kegelstumpfartige Spitze (72), die mit einer Auskehlung (73) zur drehenden Verbindung auf dem reiengförmigen gezahnten Kopf (71) einer an der Körperende (70) der genannten Stütze (7) befestigten Buchse (77), mit ebenen Backen (74) und kreisförmigen Profilen (76) versehen sind, und eine Schraube (75) zur Blockierung der Spitze (72) auf dem genannten gezahnten Kopf (71) der Buchse und auf einer Sektorenkreuzung oder - Portion eines Knoten (1 - 3 - 5) enthält, und dass die zentrische Achse des genannten Knoten (1 - 3 - 5) hohl und mindestens teilweise an ihren beiden Enden mit Gewinde versehen ist, um die Einlag durch Verschraubung von zwei Bügel (9) zu erlauben, die mit vier Flügel (91) versehen sind, die quer angeordnet und mit den genannten Profilen (76) übereinstimmend sind.

2. Netzförmige Struktur nach Anspruch 1, dadurch gezeichnet dass die genannten Knoten (1) durch sechzehn zusatzliche gleichförmige Sektoren bestimmt sind, die ein dreieckiges Profil haben, die mit ihren Spitze in der Mitte des Knoten (1) angeordnet sind und die auf entsprechenden radialen Ebene, in Bezug auf jeden der genannten anderen dreieckigförmigen Sektoren (13) symmetrichweise gepaart angeordnet sind.

**Claims**

1. Reticulate structure, tridimensional and composed of elements, comprising nodular elements (1 - 3 - 5) each for mounting a set of studs (7) with different inclinations, each nodular element (1 - 3 - 5) being defined by eight equal sectors (11), having a semicircular profile, being vertically arranged and fan-shaped around a central axis (10) and being further defined by other eight equal, horizontal sectors (13) with a triangular profile, arranged in a same plane and with their vertex at the centre of said nodular element (1 - 3), characterized in that each stud (7) is provided at its ends with a cross-shaped vice comprising two parallel tapered points (72) provided with a groove (73) for the rotative assembly on the anular toothed head (71) of a collet (77) installed at the end of the body (70) of said stud (7), with flat jaws (74) and with cross-shaped sections (76), and a screw (75) for blocking the points (72) on said toothed head (71) of the collet and on an intersection or portion of sectors of a nodular element (1 - 3 - 5) and in that the central axis (10) of said nodular element (1 - 3 - 5) is hollow and at least partially tapped at both ends to allow the installation by screwing of two stirrups (9) provided with four rips (91) corsswise arranged and corresponding to said sections (76).

2. Reticulate structure according to claim 1, characterized in that said nodular elements (1) are defined by sixteen additional equal sectors (15), having a triangular profile, with their vertex at the centre of the nodular element (1) and arranged in corresponding radial planes symmetrically mated respected to each of said other sectors with triangular profile (13).

Fig. 1

Fig. 2

Fig. 3

Fig. 4

Fig. 5

Fig. 6

**Fig. 7**

75

7

76

72

75

72

73    76    74

70

77    71

76    74

72

91

91

90

91

91

91

**Fig. 8**

Fig. 9

Fig. 10